# FASCICULE DE BREVET EUROPEEN

(11) **EP 4 171 788 B1**
(45) Date de publication et mention de la délivrance du brevet: **17.07.2024**
(21) Numéro de dépôt: 21734350.8
(22) Date de dépôt: 23.06.2021
(51) Int. Cl.: B01D 61/58, B01D 61/02, B01D 61/14

(54) **DISPOSITIF COMPACT DE FILTRATION D'EAU**
KOMPAKTE WASSERFILTRATIONSVORRICHTUNG
COMPACT WATER FILTRATION DEVICE

(30) Priorité: 26.06.2020 FR 2006732; 13.07.2020 MC 2704
(43) Date de publication de la demande: 03.05.2023
(73) Titulaire: FGWRS, 98000 Monaco (MC)
(72) Inventeur: LASSERRE, Jean-Christophe, 34150 ANIANE (FR)
(74) Mandataire: Berger, Helmut
(86) Numéro de dépôt international: PCT/EP2021/067265
(87) Numéro de publication internationale: WO 2021/260080

(56) Documents cités:
- WO-A1-2015/045574
- FR-A1- 3 023 281
- US-A1- 2018 312 412
- US-A1- 2020 047 126

## Description

L'invention s'inscrit dans le domaine du traitement des eaux. En particulier, l'invention s'applique au traitement des eaux usées de niveau de pollution faible à modéré, qualifiées d'eaux grises. Ces eaux sont notamment issues, dans les bâtiments résidentiels, de l'évacuation des douches et baignoires, des lavabos, ou encore des lave-linges. Elles peuvent aussi être issues, dans les bâtiments de bureaux, des lavabos. Elles sont chargées en poussière, détergents, poils et cheveux, à l'exclusion de pollutions plus lourdes comme l'évacuation des éviers ou a fortiori celle des toilettes ou des effluents d'atelier qui sont pris en charge par des réseaux de canalisation différents.

De nombreuses régions connaissent une densification de la population et une raréfaction des ressources en eaux, et il est donc souhaité de réutiliser les eaux grises des bâtiments après un traitement satisfaisant, pour différentes utilisations, notamment la chasse des toilettes ou les eaux de nettoyage pour parkings, hangars ou ateliers, l'arrosage des jardins voire et cela implique un plus haut niveau de traitement préalable, pour l'usage courant au robinet, hors consommation humaine de type boisson et cuisine. Une qualité d'eau maitrisée peut aussi permettre leur réutilisation vers les douches et les lavabos. Une telle réutilisation est aussi utile dans tout contexte où la ressource en eau potable est limitée, comme les sites isolés, en altitude dans les montagnes, dans des zones disposant de peu d'infrastructures comme certaines zones désertiques ou éloignées de toute unité urbaine, ou encore dans des véhicules de transport comme les avions, les navires voire les trains. Mais il y a un défi technique à transposer des systèmes couteux développés pour des situations très particulières comme les véhicules spatiaux à un niveau industriel pouvant équiper très largement des populations entières.

On connait du document FR2994965_A1 un dispositif de recyclage des eaux grises pour un avion. Il y est présenté une cuve collectrice d'eaux grises issues d'un lavabo, une pompe auto-amorçante en sortie de la cuve et un module d'ultrafiltration léger pour clarifier l'eau récupérée, fonctionnant sous 1,3 bars, et amenant l'eau filtrée vers un vase d'expansion dans laquelle elle est stockée sous 2 à 4 bars avant son utilisation pour la chasse des toilettes. L'eau reste chargée notamment de divers sels, ce qui n'est pas satisfaisant pour de nombreuses applications, ce qui explique l'utilisation limitée à la chasse des toilettes, pendant les trajets de l'appareil. Il est prévu, pour surmonter le colmatage progressif de la membrane, des phases de rétrolavage de celle-ci avec l'eau clarifiée et stockée dans le vase d'expansion, avec drainage des concentrats par un circuit de vidange.

Le document WO2013074228_A1 divulgue un système de traitement de l'eau avec ultrafiltration par membranes immergées en amont et osmose inverse en aval. Une pompe à perméat unique est installée à la sortie de plusieurs modules d'ultrafiltration à membranes immergées et alimente à une pression de 125 kPa (1,25 bar), pour éviter les cavitations, l'entrée d'une pompe de surpression et un réservoir dont le contenu est utilisé pour des cycles de rétrolavage des membranes d'ultrafiltration. La pompe de surpression est placée en entrée de l'étage d'osmose inverse. Des valves et un variateur permettent de moduler l'aspiration des différents perméats des modules d'ultrafiltration et leur redirection, tout en permettant le fonctionnement de la pompe de surpression du module d'osmose inverse. Le système implique la mise en place d'une cuve intermédiaire de collecte d'eau ayant subi l'ultrafiltration mais pas l'osmose inverse, qui occupe beaucoup d'espace dans le montage, ce qui empêche son développement aisé à grande échelle. Les documents WO 2015/045574: A1, US 2018/312412 A1, FR 3 023 281 A1 divulguent des systèmes pour le traitement d'eaux à l'osmose inverse en combinaison avec l'ultrafiltration.

On reste donc dans le besoin d'un système compact et autonome de recyclage des eaux grises offrant une eau traitée jusqu'à un niveau poussé de potabilisation, et pouvant être déployé aisément dans l'habitat existant, urbain, périurbain ou rural, grâce à une empreinte en volume occupé et bruit généré limitée. Ce dispositif pourra également être utilisé comme procédé de traitement d'eau de forage ou de pluie pour des habitations individuelles.

Il est proposé pour répondre à ce problème un dispositif de filtration d'eau comprenant un étage amont de clarification barométrique à membrane et un étage aval de purification barométrique avancée, ledit étage aval comprenant un moyen de surpression en amont d'un moyen de filtration, le dispositif comprenant de plus un circuit pour utiliser une eau clarifiée par le dispositif et accumulée dans un réservoir pour effectuer périodiquement ou du moins quand cela est nécessaire un lavage dudit étage amont.

Ainsi, un traitement poussé de l'eau à filtrer est effectué, avec deux étages successifs de traitement. De plus, le premier étage étant un étage à membrane, il est prévu de laver celui-ci par un circuit qui utilise de l'eau clarifiée et accumulée. On évite ainsi de consommer de l'eau de réseau pour le lavage, ce qui est très avantageux.

De manière remarquable le dispositif comprend de plus une commande pour contrôler un basculement entre deux modes de fonctionnement. Cette commande peut être de tout type et notamment être totalement ou à l'inverse très partiellement automatisée, et elle peut aussi être programmée dans l'électronique du dispositif, ou sous le contrôle d'un dispositif externe déporté.

Le premier mode de fonctionnement est un mode de production d'eau filtrée et le deuxième mode de fonctionnement est un mode d'entretien périodique.

Le mode de production d'eau filtrée comprend une application à une sortie de perméat de l'étage amont d'une aspiration créée par le fonctionnement du moyen de surpression. Ainsi, on profite du moyen de surpression pour amplifier voire de préférence créer la différence de pression nécessaire pour le fonctionnement de l'étage amont. L'étage amont peut ainsi ne pas avoir de pompe de gavage, voire n'être équipé d'aucune pompe qui lui soit propre. Les deux étages de traitement fonctionnent de manière synchronisée, au moins partiellement, voire totalement synchronisée, et à ce titre il n'y a pas d'accumulation contrôlée d'eau dans un réservoir en sortie de l'étage amont.

Le mode de fonctionnement d'entretien périodique comprend quant à lui une circulation d'eau vers l'étage amont pour effectuer ledit lavage depuis un réservoir d'accumulation du dispositif placé en aval de la sortie de perméat dudit moyen de filtration. Ce réservoir permet d'accumuler de l'eau clarifiée (et même potabilisée par la purification avancée) qui est utilisée pour le lavage. Comme cette eau est traitée à un niveau avancé, et par exemple jusqu'au niveau de la potabilisation, elle est également utilisable pour les usages évoqués précédemment, à savoir les douches, les lavabos, l'arrosage des jardins, le nettoyage des ateliers, ou la chasse des toilettes.

Grâce à ces caractéristiques, on peut diminuer le volume occupé par le dispositif, et lui donner un format compatible avec les bâtiments existants dans le logement ou le tertiaire. En effet, il n'est pas besoin de stocker l'eau clarifié mais pas traitée par l'étage de purification avancée, comme cela avait été proposé précédemment. Et il n'est pas nécessaire de multiplier le nombre de pompes indépendantes les unes des autres, comme cela avait été proposé précédemment.

De manière optionnelle, et avantageuse,
- l'étage amont peut comprendre un module de clarification comprenant un carter rigide étanche, au sein duquel une membrane est disposée sur le trajet d'eau, le carter étant alimenté en entrée par une cuve d'eau à traiter accumulée ;
- le moyen de surpression peut être une pompe unique, ou un groupe de plusieurs pompes en parallèle ou en série ;
- le lavage du module de clarification peut être un rétrolavage ;
- les moyens de filtration de l'étage aval peuvent comprendre une unité d'osmose inverse ;
- l'étage amont peut comprendre une unité d'ultrafiltration ;
- le moyen de surpression peut comprendre une pompe auto-amorçante ;
- le moyen de surpression peut comprendre une pompe munie d'une soupape de décharge configurée pour réguler la pression en sortie de la pompe ;
- le mode de fonctionnement d'entretien périodique peut comprendre aussi une circulation d'eau vers l'étage aval depuis ledit réservoir d'accumulation placé en aval de la sortie de perméat de l'étage aval, pour laver les moyens de filtration de l'étage aval ;
- le mode de fonctionnement d'entretien périodique peut comprendre des cycles de lavage à l'eau claire ;
- le mode de fonctionnement d'entretien périodique peut comprendre des cycles de lavage avec des produits d'entretien.

Optionnellement, le procédé est appliqué à des eaux grises de réseau.

L'invention va maintenant être décrite en relation avec les figures annexées, fournies à titre illustratif.
Les figures 1 à 5 montrent chacune un mode de réalisation d'un procédé et d'un dispositif selon l'invention.
Les figures 6 et 7 montrent chacune un mode de fonctionnement du mode de réalisation de la figure 1, pris comme exemple illustratif.

Divers composants mis en oeuvre sont identiques dans les différents modes de réalisation, et portent alors la même référence.

L'invention est mise en oeuvre de préférence sous la forme d'un module s'apparentant à une armoire, ou un container de forme parallélépipédique rectangle et disposé verticalement, de hauteur inférieure à une hauteur sous plafond courante dans l'habitation, soit par exemple moins de 2 m, alimenté en énergie par le réseau domestique d'électricité par exemple 230 V monophasé. L'empreinte au sol du dispositif en dehors des cuves peut être de l'ordre de 500 cm² environ, et de forme proche d'un carré.

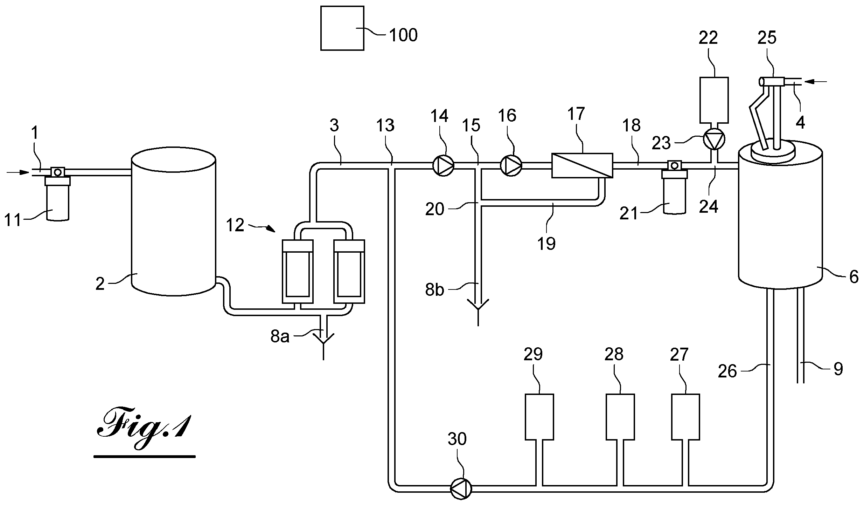

[Fig. 1] En entrée, le dispositif comprend une canalisation 1 de collecte d'eaux, à relier notamment à une évacuation d'eaux grises de bâtiment ou de lotissement, qui permet d'alimenter une cuve à eaux grises 2 qui vise à récupérer les effluents répondant à la qualification d'eaux grises du réseau du bâtiment. Il comprend aussi une arrivée 4 d'eau claire (eau potable) du réseau de bâtiment ou de lotissement.

En sortie, le dispositif comprend une cuve 6 d'eau traitée, des sorties de rejet 8a et 8b vers les égouts (drains), et une sortie principale 9 d'eaux traitées. L'arrivée 4 d'eau claire (eau potable) du réseau est injectée sur la cuve 6 d'eau traitée par l'intermédiaire d'un disconnecteur 25 (organe de protection contre les retours d'eau vers le réseau d'eau potable qui est à protéger).

La cuve à eaux grises 2 est protégée en amont par un filtre, sur la canalisation 1 de collecte d'eaux grises, permettant de séparer les plus gros éléments comme les cheveux, les poils, de l'eau grise circulant dans la canalisation 1 de collecte d'eaux grises, qui alimente la cuve à eaux grises 2.

Une canalisation 3 de sortie de la cuve à eaux grises 2 permet de faire circuler un flux d'eau grise stockée dans la cuve à eaux grises dans un système de filtration en plusieurs étages. Le débit de ce flux est lissé, du fait du volume d'eaux grises stocké dans la cuve à eaux grises 2, qui constitue un tampon en entrée.

Le système de traitement des eaux, en aval de la cuve à eaux grises 2, sur la canalisation 3 de sortie de la cuve à eaux grises, comprend, à la sortie de la cuve à eaux grises 2, un système de filtration constitué d'un module d'ultrafiltration 12 suivi d'une unité d'osmose inverse 17. Le module d'ultrafiltration 12 est composé de membranes fibres creuses en matériaux polymères placées dans un carter enrobant rigide et à paroi étanche à l'air et à l'eau. La filtration est effectuée en mode frontal de l'extérieur vers l'intérieur des fibres. Un drain permet d'évacuer le concentrat et de le diriger vers la sortie de rejet 8a.

L'unité d'osmose inverse 17 est composée d'une membrane spirale en polymère. La filtration est effectuée en mode tangentiel. Un drain permet là aussi d'évacuer le concentrat (ou rétentat) et de le diriger vers la sortie de rejet 8b.

Les eaux grises passent au travers du module d'ultrafiltration 12 puis, une fois clarifiées par celui-ci - elles en constituent alors le perméat, au travers de la membrane d'osmose inverse de l'unité d'osmose inverse 17. En sortie du système d'osmose inverse, une canalisation de sortie 18 emmène l'eau filtrée - le perméat de l'unité d'osmose inverse - en direction de la cuve d'eau filtrée 6.

L'unité d'osmose inverse 17, qui intègre la membrane, possède une sortie de concentrat (ou rétentat) 19, dont le débit est orienté, en un point de séparation 20, en partie vers la sortie de rejet 8b, et en partie vers un point de réinjection 15 sur la canalisation 3, en amont de l'unité d'osmose inverse 17.

Entre le point de réinjection 15 et l'unité d'osmose inverse 17, une pompe de circulation 16 est présente sur la canalisation 3 et utilisée pour créer une vitesse tangentielle sur la membrane d'osmose inverse, en sorte que la membrane d'osmose inverse ne se colmate pas. Cette pompe est qualifiée de pompe de circulation. Son aval est interfacé avec le point de réinjection de la canalisation 19 sur la canalisation 3 et son amont est interfacé avec l'entrée de l'unité d'osmose inverse 17.

Un filtre à charbon actif 21 peut être placé en aval de l'unité d'osmose inverse 17, sur la canalisation de sortie 18, en amont de la cuve d'eau filtrée 6, pour apporter une post-filtration sur l'eau. Alternativement, le filtre 21 peut être remplacé par un ozoneur.

L'eau traitée est ensuite désinfectée à l'aide d'un réservoir 22 équipé d'une pompe d'injection 23, opérant en un point d'injection 24 sur la canalisation de sortie 18, avant d'être dirigée vers la cuve d'eaux grises traitées 6.

Lors du processus de filtration, qui est organisé en cycles commandés par l'automate 100, l'eau circule ainsi, de la cuve d'eaux grises 2 vers la cuve d'eau traitée 6, par la canalisation 3.

Mais des cycles de retro-lavage et des cycles de nettoyage sont aussi prévus et commandés par l'automate 100. Pendant ces cycles, l'eau ne circule pas de la cuve d'eaux grises 2 vers la cuve d'eau traitée 6.

Un ensemble de nettoyage composé de tuyauteries parallèles, d'électrovannes et d'une pompe permet le rétro-lavage, lors de cycles d'entretien du système, des filtres par l'eau traitée produite. Plus précisément, une fraction de l'eau traitée produite (le perméat de l'unité d'osmose inverse stocké dans la cuve d'eau 6, dans laquelle est introduite en cas de manque d'eau d'apport pour les usages aval de l'eau claire du réseau pour assurer le fonctionnement des usages en aval par la sortie principale 9 d'eaux traitées, est dirigée depuis la cuve d'eau traitée 6 par une canalisation 26, et une pompe 30 permet de la diriger vers un point d'injection 13 sur la canalisation 3, au cours de cycles de rétrolavage, où les membranes d'ultrafiltration sont lavées à l'envers.

Cet ensemble de nettoyage comprend de plus des cuves de stockage des solutions de traitement, par exemple une première cuve de solution 27, une deuxième cuve 28 et une troisième cuve 29. Au cours de certains cycles d'entretien chimique, des quantités contrôlées des contenus de ces cuves sont introduites dans les membranes par la canalisation 26 vers le point d'injection 13 sur la canalisation 3. Cela permet de décolmater les membranes d'ultrafiltration par circulation et trempage des membranes avec différentes solutions dédiées.

Le dispositif est géré par une carte électronique ou un automate et un programme spécifique qui gère les fréquences et cycles de filtration et de rétro-lavage ainsi que les cycles des nettoyages chimiques. Cette carte électronique ou cet automate et ce programme constituent l'organe de commande 100. Il commande diverses vannes permettant de fermer ou ouvrir la circulation de l'eau à différents points des canalisations 3, 19 et 26.

De manière très originale, sur la canalisation 3, une pompe 14 est placée entre le module d'ultrafiltration 12 et l'unité d'osmose inverse 17 et permet de créer une dépression en aval des membranes d'ultrafiltration mais également une surpression pour alimenter la boucle d'osmose inverse.

Dans le mode de réalisation de la figure 1, la pompe 14 est placée avec son amont interfacé avec le point d'injection 13 de la canalisation 26 et son aval interfacé avec le point de réinjection 15 de la canalisation 19.

Cela permet d'utiliser une pompe 14 qui n'est passante que dans le sens du module d'ultrafiltration 12 vers l'unité d'osmose inverse 17, puisqu'ainsi, lors des cycles de nettoyage ou de rétro-lavage, le débit provenant de la pompe 30 peut atteindre les membranes d'ultrafiltration sans passer par la pompe 14.

On précise de plus que cette pompe 14 est munie d'une soupape de décharge qui permet de réguler la pression en sortie de la pompe sans utiliser de variateur de fréquence.

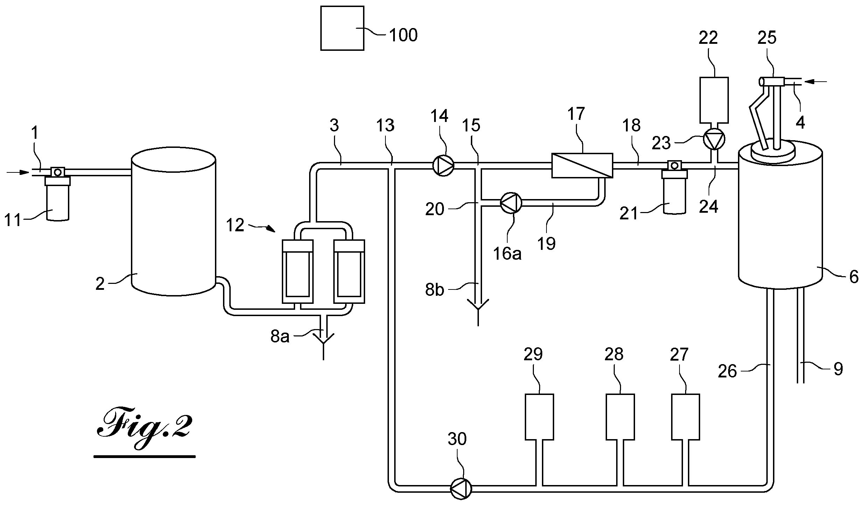

[Fig. 2] Selon le mode de réalisation de la figure 2, la pompe de circulation 16 est supprimée et remplacée par une pompe de circulation 16a présente sur la canalisation 19 avec son amont interfacé avec la sortie de concentrât (ou retentât) de l'unité d'osmose inverse 17 et son aval interfacé avec le point de séparation 20 entre la sortie de rejet 8b et le point de réinjection 15 de la canalisation 19 sur la canalisation 3.

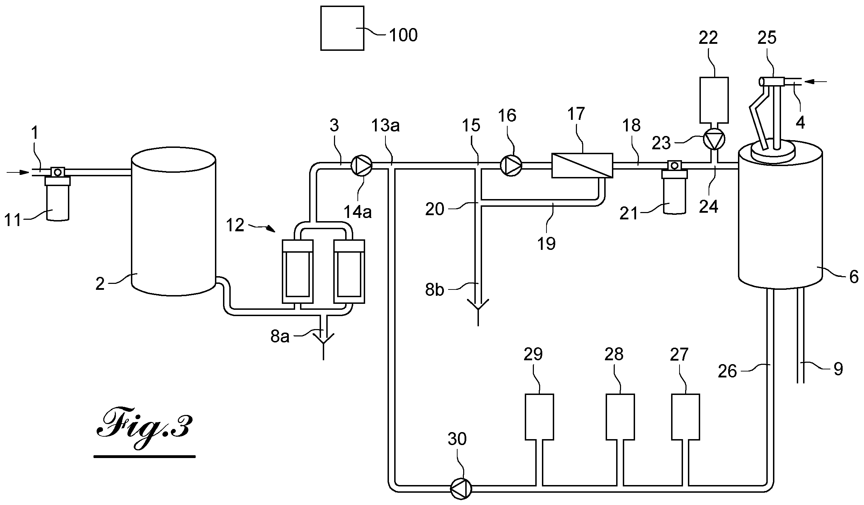

[Fig. 3] Selon le mode de réalisation de la figure 3, la pompe de surpression 14 est supprimée et remplacée par une pompe de surpression 14a présente sur la canalisation 3 entre la sortie de perméat du module d'ultrafiltration 12 et le point de réinjection 13a de la canalisation 26 sur la canalisation 3 avec par exemple son amont interfacé avec la sortie de perméat du module d'ultrafiltration 12 et son aval interfacé avec point de réinjection 13a. La pompe de surpression 14a est passante dans les deux sens pour permettre la circulation d'eau de lavage de la canalisation 26 vers le module d'ultrafiltration 12, lors des cycles de rétrolavage et de nettoyage. Une pompe de circulation positionnée comme celle de la figure 1 ou celle de la figure 2 peut être présente, ou aussi être absente.

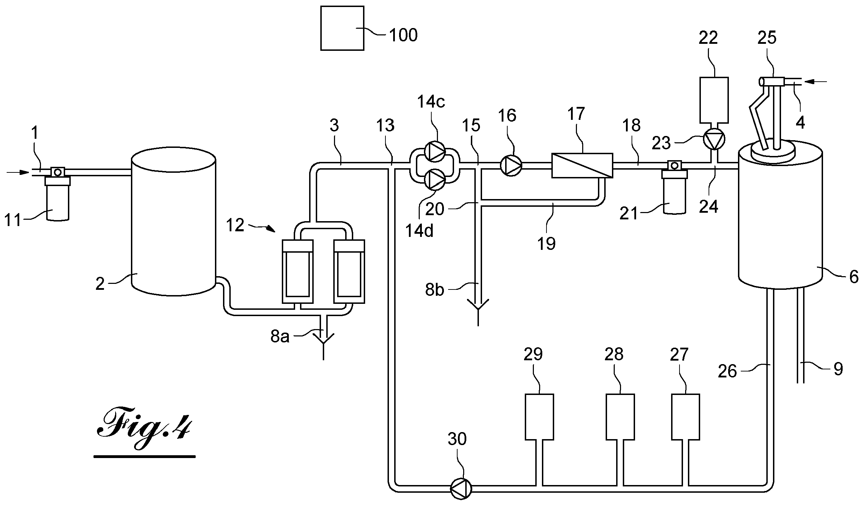

[Fig. 4] Selon le mode de réalisation de la figure 4, la pompe de surpression 14 a été supprimée, et remplacée, avec conservation des interfaces aval et amont, par deux pompes 14c et 14d pouvant être de plus petites tailles et puissances, placées en parallèles l'une de l'autre, et commandées de manière synchronisée.

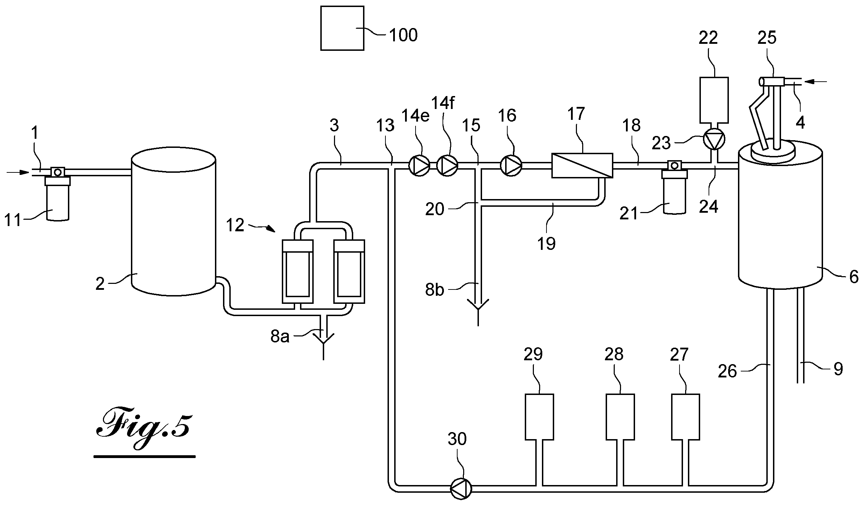

[Fig. 5] Selon le mode de réalisation de la figure 5, la pompe de surpression 14 a été supprimée, et remplacée là aussi, avec conservation des interfaces aval et amont, par deux pompes 14e et 14f pouvant être de plus petites tailles et puissances, et placées cette fois-ci en série l'une vis-à-vis de l'autre, et commandées de manière synchronisée.

Dans les modes de réalisation qui ont été présentés, le module d'ultrafiltration fonctionne en mode frontal, et fait l'objet d'un rétrolavage. Alternativement, tout en restant dans le cadre de l'invention, un module d'ultrafiltration en mode tangentiel pourrait être utilisé, et le lavage pourrait être effectué par l'avant, ou sous la forme d'un rétrolavage.

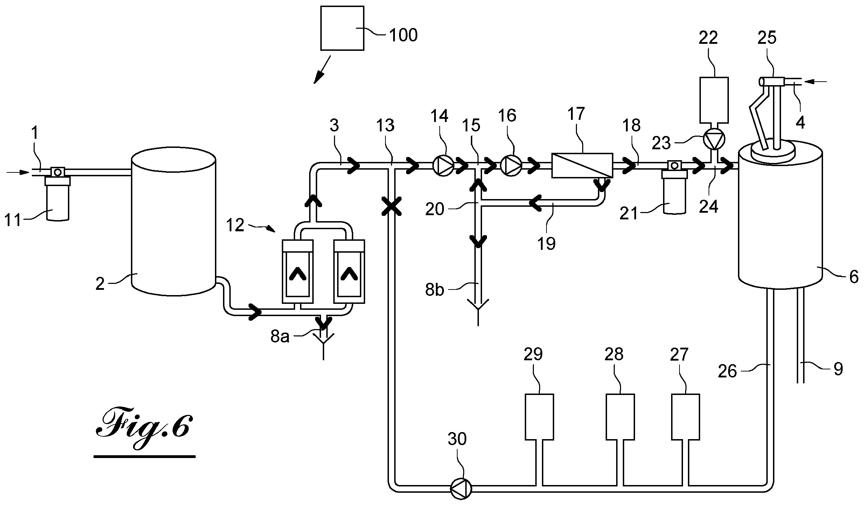

[Fig. 6] En figure 6, on a représenté le mode de fonctionnement de production d'eau filtrée comprenant une application à la sortie de perméat de l'étage amont de l'aspiration créée par le fonctionnement de la pompe 14. L'eau circule du réservoir 2 à travers les membranes d'ultrafiltration puis à travers l'unité d'osmose inverse et enfin s'accumule dans le réservoir 6. Le circuit de lavage est fermé par une électrovanne à proximité du point d'injection 13.

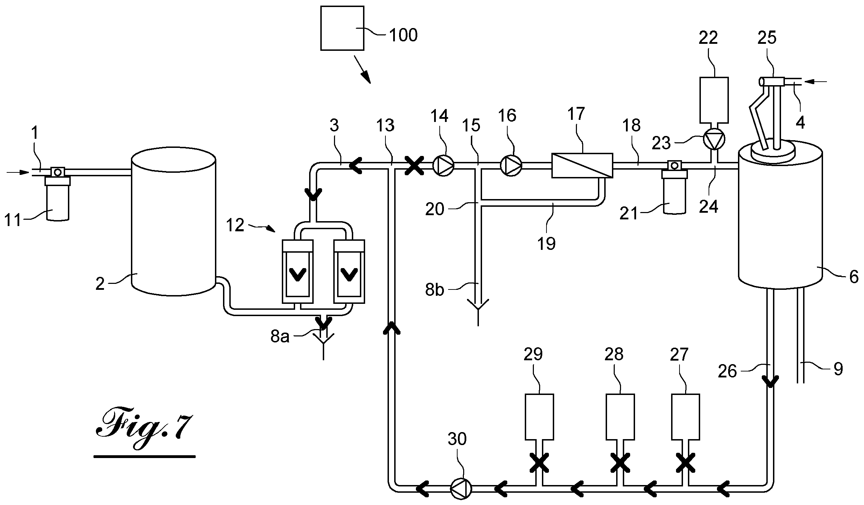

[Fig. 7] En figure 7, on a représenté le mode de fonctionnement d'entretien périodique comprenant une circulation d'eau vers l'étage amont pour effectuer le lavage, ici un rétrolavage, depuis le réservoir d'accumulation placé en aval de la sortie de perméat de l'étage aval. La membrane d'osmose inverse n'est pas lavée sur la figure, l'entrée du module étant fermée à proximité du point d'injection 13. Des produits de nettoyage des réservoirs 37 à 29 peuvent éventuellement être utilisés pendant certaines phases d'entretien, mais dans le mode de réalisation présenté, quand l'eau dessalée issue du réservoir 6 circule pour le lavage des membranes d'ultrafiltration, les produits de nettoyage ne sont pas utilisés.

L'automate 100 contrôle le basculement entre les modes de fonctionnement des figures 6 et 7 en agissant sur une série d'électrovannes et sur les pompes 14 et 30 principalement.

## Revendications

1. Dispositif de traitement d'eau comprenant, sur une canalisation (3) d'eaux à traiter, un étage amont de clarification barométrique à membrane (12) et un étage aval de purification barométrique avancée, ledit étage aval comprenant un moyen de surpression (14, 14a- 14f) en amont d'un moyen de filtration (17) de l'étage aval, ledit moyen de filtration (17) de l'étage aval comprenant une sortie de retentât (19), le dispositif de traitement d'eau comprenant de plus un circuit (26) de lavage avec une eau clarifiée par le dispositif de traitement d'eau et accumulée dans un réservoir (6), effectuer périodiquement un lavage dudit étage amont (12) à membrane, et le dispositif de traitement d'eau étant **caractérisé en ce qu'il** comprend de plus une commande (100) de contrôle d'un basculement entre d'une part un mode de production d'eau filtrée comprenant une application à une sortie de perméat de l'étage amont d'une aspiration créée par ledit moyen de surpression (14, 14a- 14f) et une application à ladite sortie de retentât (19) d'une circulation dans une canalisation (19) ayant un point de réinjection (15) sur ladite canalisation (3) d'eaux à traiter et d'autre part un mode d'entretien périodique comprenant une circulation d'eau vers l'étage amont (12) depuis ledit réservoir (6) qui est placé en aval d'une sortie de perméat dudit moyen de filtration (17) de l'étage aval, par ledit circuit (26) pour lavage, ledit circuit (26) pour lavage ayant un point d'injection (13) sur ladite canalisation (3) d'eaux à traiter, ledit point d'injection (13) du circuit de lavage étant interfacé avec l'amont du moyen de surpression (14, 14a-14f), et le point de réinjection (15) étant interfacé avec l'aval du moyen de surpression (14, 14a-14f).

2. Dispositif de traitement d'eau selon la revendication 1, **caractérisé en ce que** l'étage amont (12) comprend un module de clarification comprenant un carter rigide étanche, au sein duquel une membrane est disposée, le carter étant alimenté en entrée par une cuve d'eau à traiter accumulée.

3. Dispositif de traitement d'eau selon la revendication 1 ou la revendication 2, **caractérisé en ce que** le moyen de surpression (14 ; 14a-14f) est une pompe unique, ou un groupe de plusieurs pompes en parallèle ou en série.

4. Dispositif de traitement d'eau selon l'une des revendications 1 à 3, **caractérisé en ce que** le lavage de l'étage amont (12) à membrane comprend un rétrolavage.

5. Dispositif de traitement d'eau selon l'une des revendications 1 à 4, **caractérisé en ce que** ledit moyen de filtration (17) de l'étage aval comprend une unité d'osmose inverse.

6. Dispositif de traitement d'eau selon l'une des revendications 1 à 5, **caractérisé en ce qu'**une pompe (30) permet de diriger ladite eau clarifiée vers le point d'injection (13) sur la canalisation (3).

7. Dispositif de traitement d'eau selon l'une des revendications 1 à 6, **caractérisé en ce que** l'étage amont de clarification barométrique à membrane (12) comprend une unité d'ultrafiltration.

8. Dispositif de traitement d'eau selon l'une des revendications 1 à 7, **caractérisé en ce que** le moyen de surpression (14, 14a- 14f) comprend une pompe auto-amorçante.

9. Dispositif de traitement d'eau selon l'une des revendications 1 à 8, **caractérisé en ce que** le moyen de surpression (14, 14a- 14f) comprend une pompe munie d'une soupape de décharge configurée pour réguler une pression en sortie de la pompe.

10. Dispositif de traitement d'eau selon l'une des revendications 1 à 9, **caractérisé en ce que** le mode d'entretien périodique comprend aussi une circulation d'eau vers l'étage aval depuis ledit réservoir (6), pour laver ledit moyen de filtration (17) de l'étage aval.

11. Dispositif de traitement d'eau selon l'une des revendications 1 à 10, **caractérisé en ce que** le mode d'entretien périodique comprend des cycles de lavage à ladite eau clarifiée.

12. Procédé de filtration d'eaux grises, **caractérisé en ce qu'**il utilise un dispositif de traitement d'eau selon l'une des revendications 1 à 11

## Patentansprüche

1. Wasseraufbereitungsvorrichtung, umfassend, auf einem Kanal (3) von aufzubereitendem Wasser, eine vorgelagerte Stufe zur barometrischen Klärung mit Membran (12) und eine nachgelagerte Stufe zur fortgeschrittenen barometrischen Reinigung, wobei die nachgelagerte Stufe eine Unterdrückungsmittel (14, 14a- 14f) vorgelagert von einem Filtrationsmittel (17) der nachgelagerten Stufe umfasst, wobei das Filtrationsmittel (17) der nachgelagerten Stufe einen Retentatausgang (19) umfasst, wobei die Wasseraufbereitungsvorrichtung außerdem einen Kreislauf (26) zum Spülen umfasst, um mit durch die Wasseraufbereitungsvorrichtung geklärtem und in einem Behälter (6) angesammeltem Wasser periodisch eine Spülung der vorgelagerten Stufe (12) mit Membran durchzuführen, und wobei die Wasseraufbereitungsvorrichtung **dadurch gekennzeichnet ist, dass** sie außerdem eine Steuerung (100) zur Kontrolle eines Kippens zwischen einerseits einem Modus zur Herstellung von filtriertem Wasser, umfassend eine Anwendung auf einen Ausgang von Permeat der vorgelagerten Stufe einer Ansaugung, die durch das Unterdrückungsmittel (14, 14a- 14f) geschaffen wurde, und eine Anwendung auf den Ausgang des Retentats (19) einer Zirkulation in einem Kanal (19), der einen Neuinjektionspunkt (15) auf dem Kanal (3) von aufzubereitendem Wasser aufweist, und andererseits einem Modus zum periodischen Unterhalt, umfassend eine Wasserzirkulation hin zur vorgelagerten Stufe (12) von dem Behälter (6), der nachgelagert von einem Ausgang von Permeat des Filtrationsmittels (17) der nachgelagerten Stufe durch den Kreislauf (26) zur Spülung platziert ist, wobei der Kreislauf (26) zur Spülung einen Injektionspunkt (13) auf dem Kanal (3) von aufzubereitendem Wasser aufweist, wobei der Injektionspunkt (13) des Spülkreislaufs mit der vorgelagerten Seite des Unterdrückungsmittels (14, 14a-14f) eine Schnittstelle bildet und der Neuinjektionspunkt (15) mit der nachgelagerten Seite des Unterdrückungsmittels (14, 14a-14f) eine Schnittstelle bildet.

2. Wasseraufbereitungsvorrichtung nach Anspruch 1, **dadurch gekennzeichnet, dass** die vorgelagerte Stufe (12) ein Klärungsmodul umfasst, umfassend ein enges starres Gehäuse, in dessen Innerem eine Membran angeordnet ist, wobei das Gehäuse am Eingang durch einen Tank von angesammeltem aufzubereitendem Wasser versorgt wird.

3. Wasseraufbereitungsvorrichtung nach Anspruch 1 oder Anspruch 2, **dadurch gekennzeichnet, dass** das Unterdrückungsmittel (14; 14a-14f) eine einzelne Pumpe, oder eine Gruppe von mehreren parallel oder in Serie geschalteten Pumpen ist.

4. Wasseraufbereitungsvorrichtung nach Anspruch 1 bis 3, **dadurch gekennzeichnet, dass** das Spülen der vorgelagerten Stufe (12) mit Membran eine Rückspülung umfasst.

5. Wasseraufbereitungsvorrichtung nach Anspruch 1 bis 4, **dadurch gekennzeichnet, dass** das Filtrationsmittel (17) der nachgelagerten Stufe eine inverse Osmose umfasst.

6. Wasseraufbereitungsvorrichtung nach einem der Ansprüche 1 bis 5, **dadurch gekennzeichnet, dass** eine Pumpe (30) ermöglicht, das geklärte Wasser hin zum Injektionspunkt (13) auf dem Kanal (3) zu leiten.

7. Wasseraufbereitungsvorrichtung nach einem der Ansprüche 1 bis 6, **dadurch gekennzeichnet, dass** die vorgelagerte Stufe zur barometrischen Klärung mit Membran (12) eine Ultrafiltrationseinheit umfasst.

8. Wasseraufbereitungsvorrichtung nach einem der Ansprüche 1 bis 7, **dadurch gekennzeichnet, dass** das Unterdrückungsmittel (14; 14a-14f) eine selbstansaugende Pumpe umfasst.

9. Wasseraufbereitungsvorrichtung nach einem der Ansprüche 1 bis 8, **dadurch gekennzeichnet, dass** das Unterdrückungsmittel (14; 14a-14f) eine Pumpe umfasst, die mit einem Überströmventil ausgestattet ist, das konfiguriert ist, um einen Druck am Ausgang der Pumpe zu regulieren.

10. Wasseraufbereitungsvorrichtung nach einem der Ansprüche 1 bis 9, **dadurch gekennzeichnet, dass** der Modus zum periodischen Unterhalt auch eine Wasserzirkulation hin zur nachgelagerten Stufe von dem Behälter (6) umfasst, um das Filtrationsmittel (17) der nachgelagerten Stufe zu spülen.

11. Wasseraufbereitungsvorrichtung nach einem der Ansprüche 1 bis 10, **dadurch gekennzeichnet, dass** der Modus zum periodischen Unterhalt Spülzyklen am geklärten Wasser umfasst.

12. Verfahren zum Filtrieren von Grauwasser, **dadurch gekennzeichnet, dass** es eine Wasseraufbereitungsvorrichtung nach einem der Ansprüche 1 bis 11 verwendet.

## Claims

1. A water treatment device comprising, on a pipe (3) for water to be treated, an upstream membrane barometric clarification stage (12) and a downstream advanced barometric purification stage, said downstream stage comprising an overpressure means (14, 14a-14f) upstream of a filtration means (17) of the downstream stage, said filtration means (17) of the downstream stage comprising a retentate outlet (19), the water treatment device also comprising a washing circuit (26) for using water clarified by the water treatment device and accumulated in a tank (6) to perform periodic washing of said upstream membrane stage (12), and the water treatment device being **characterized in that** it also comprises a command (100) for controlling switching between an operating mode for producing filtered water comprising applying suction created by said overpressure means (14, 14a-14f) to a permeate outlet of the upstream stage and applying circulation to said retentate outlet (19) in a pipe (19) having a reinjection point (15) on said pipe (3) for water to be treated, on the one hand, and a periodic maintenance mode comprising circulating water toward the upstream stage (12) from said tank (6) that is placed downstream of a permeate outlet of said filtration means (17) of the downstream stage, by said washing circuit (26), said washing circuit (26) having an injection point (13) on said pipe (3) for water to be treated, said injection point (13) of the washing circuit interfacing with the upstream of the overpressure means (14, 14a-14f), and the reinjection point (15) interfacing with the downstream of the overpressure means (14, 14a-14f), on the other hand.

2. The water treatment device according to claim 1, **characterized in that** the upstream stage (12) comprises a clarification module comprising a sealed rigid casing, within which a membrane is arranged, the casing being supplied at the inlet by a container for accumulated water to be treated.

3. The water treatment device according to claim 1 or claim 2, **characterized in that** the overpressure means (14; 14a-14f) is a single pump, or a group of several pumps in parallel or in series.

4. The water treatment device according to one of claims 1 to 3, **characterized in that** the washing of the upstream membrane stage (12) comprises backwashing.

5. The water treatment device according to one of claims 1 to 4, **characterized in that** said filtration means (17) of the downstream stage comprises a reverse osmosis unit.

6. The water treatment device according to one of claims 1 to 5, **characterized in that** a pump (30) makes it possible to direct said clarified water toward the injection point (13) on the pipe (3).

7. The water treatment device according to one of claims 1 to 6, **characterized in that** the upstream membrane barometric clarification stage (12) comprises an ultrafiltration unit.

8. The water treatment device according to one of claims 1 to 7, **characterized in that** the overpressure means (14, 14a-14f) comprises a self-priming pump.

9. The water treatment device according to one of claims 1 to 8, **characterized in that** the overpressure means (14, 14a-14f) comprises a pump provided with an overflow valve configured to regulate the pressure at the outlet of the pump.

10. The water treatment device according to one of claims 1 to 9, **characterized in that** the periodic maintenance mode also comprises circulating water toward the downstream stage from said tank (6), to wash said filtration means (17) of the downstream stage.

11. The water treatment device according to one of claims 1 to 10, **characterized in that** the periodic maintenance mode comprises washing cycles with said clear water.

12. A graywater filtration method, **characterized in that** it uses a water treatment device according to one of claims 1 to 11.
